# EUROPEAN PATENT APPLICATION

(11) **EP 2 731 348 A2**
(43) Date of publication of application: **14.05.2014**
(21) Application number: 13192439.1
(22) Date of filing: 12.11.2013
(51) Int. Cl.: H04N 21/4788, H04N 21/41, H04N 21/4223, H04N 21/422, H04N 21/81, G06Q 50/00, G06F 3/01, H04N 13/04, H04N 7/15

(54) **Apparatus and method for providing social network service using augmented reality**

(30) Priority: 13.11.2012 KR 20120128337
(71) Applicant: Samsung Electronics Co., Ltd, Gyeonggi-do 443-742 (KR)
(72) Inventor: Mun, Min-Young, Seoul (KR); Jung, Eun-Sung, Gyeonggi-do (KR)
(74) Representative: Grünecker, Kinkeldey, Stockmair & Schwanhäusser

(57) **Abstract**

A system for providing a social network service (SNS) by utilizing augmented reality. The system includes a first device configured to receive image of a first user, to create a reference image based on the received images, and to transmit the reference image to a second device; and the second device is configured to receive the reference image from the first device, to generate a virtual image based on the reference image and the current context information of a second user, and to display the virtual image at predetermined locations.

## Description

### 1. Field

The following description relates to provision of social network services by implementing augmented reality using a television system.

### 2. Description of the Related Art

With the recent trend of sharing opinions and exchanging information via social network services (SNS), attention has been drawn to systems that allow users to chat in real-time with other users while watching the same television (TV) programs. Generally, users need to look at a display and input a message using a keyboard to continue the conversation while watching TV at the same time. Thus, users have difficulty typing on the keyboard while focusing their attention on watching TV. Therefore, TV has evolved from a home appliance to a communication system enjoyed by many users by the simple application of SNS to TV. These communication systems, however, do not provide an environment where the user can feel that a group of persons are actually in the same place and are having a real conversation while watching TV together.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, there is provided a system for providing a social network service (SNS), the system includes a first device configured to receive image of a first user, to create a reference image based on the received images, and to transmit the reference image to a second device; and the second device is configured to receive the reference image from the first device, to generate a virtual image based on the reference image and the current context information of a second user, and to display the virtual image at predetermined locations.

The first device may include an image sensor configured to collect images of the second user, and to transmit the collected images to the first user.

The first device may be further configured to receive a first audio of the first user and to output the first audio or to transmit the first audio to the second device, and to receive a second audio of the second user and to transmit the second audio to the first user. The first device may be further configured to receive one or more control instructions to control the first device, the control instructions comprising instructions to show a list of friends of the second user currently watching a broadcast program, or to initiate a conversation with one or more friends of the second user.

The context information may include at least one of a viewing direction or viewing angle of the second user.

The second device may be further configured to determine a shape of the virtual image based on the context information and a location at which to display the virtual image. The first device may be a television configured to receive and output TV signals, and the second device may be a wearable device.

The virtual image may be displayed to overlap another image displayed on the first device.

In another general aspect, a method of providing a social network service (SNS), the method including receiving, at a first device, an image of a first user of the SNS; creating a reference image based on the received image; transmitting the reference image to a second device; generating, at the second device, a virtual image based on the reference image and the current context information of a second user; and displaying the virtual image at predetermined locations.

The method may further include receiving a first audio of the first user; and outputting the first audio of the first user or transmitting the first audio to the second device.

The method may further include transmitting images of the second user collected by an image sensor to the first user.

The context information may include at least one of a viewing direction or a viewing angle of the second user.

The generating of the virtual image may include determining a shape of the virtual image to be generated based on the context information and a location at which to display the virtual image.

The first device may be a television that is configured to receive and output TV signals, and the second device may be a wearable device.

The creating the reference image may include creating the reference image based on the received image and a default image of the first user.

The default image may be based on at least one of an emotional state of the first user or a facial expression of the first user.

The default image may be stored in the default image database and may include at least one of avatars, images of celebrities, real images of the first user, or images associated with the first user.

The displaying the virtual image may include displaying the virtual image to overlap another image displayed on the first device.

The displaying the virtual image may include displaying a portion of the virtual image of the first user.

In another general aspect, a device including at least one image sensor, the image sensor configured to collect an image of a first user; a first communication unit configured to transmit the image of the first user to a second user, and to receive an image of the second user ; an image creating unit configured to create a reference image based on the received image of the second user; and a second communication unit configured to transmit the reference image to a second device; and to generate a virtual image to be displayed to the first user using the reference image.

The device may further include a user recognizing unit configured to recognize the first user; and an instruction processing unit configured to receive various control instructions from the first user and to process corresponding operations in response to the control instructions.

The control instructions may include at least one of showing a list of all friends, showing a list of friends currently watching a broadcast program, or initiating a conversation with a particular friend.

The device may further include a voice output unit configured to output a audio of the second user that is received through the first communication unit; and a voice receiving unit configured to receive a audio of the first user and to transmit the audio of the first user to the second user through the first communication unit.

The device may further include a default image database (DB) configured to store default images for creating the reference image, wherein the image creating unit is configured to select one default image based on the received image of the second user to create the reference image.

In another general aspect, a second device including a communication unit configured to receive a reference image of a second user from a first device; a context recognizing unit configured to recognize a current contextual information of a first user watching content displayed on the first device; a rendering unit configured to generate a virtual image based on the received reference image and the context information; and a display unit configured to display the generated virtual image at a predetermined location.

The second device may further include an image sensor configured to create an image of the first user: and the context recognizing unit analyzes the image of the first user and generates the context information comprising at least one of a viewing direction or a viewing angle of the user.

The rendering unit may be further configured to determine a shape of the virtual image based on the context information and a location at which to display the virtual image.

The second device may further include a voice output unit configured to output a spoken voice of the second user which is received from the first device through the communication unit; and a voice receiving unit configured to receive a spoken voice of the first user and to transmit the received voice to the first device through the communication unit.

The second device may be a wearable device.

Other features and aspects will be apparent from the following detailed description, the drawings, and the claims.

### BRIEF DESCRIPTION OF THE DRAWINGS

FIG. 1 is a diagram illustrating an example of an apparatus for providing a social network service.
FIG. 2 is a diagram illustrating an example of an apparatus for providing a social network service.
FIGS. 3A to 3C are diagrams illustrating examples of displaying an image of the user's friend.
FIG. 4 is a diagram illustrating an example of a method of providing a social network service.
FIG. 5 is a diagram illustrating an example of a first device.
FIG. 6 is a diagram illustrating an example of operations of a first device.
FIG. 7 is a diagram illustrating an example of a second device.
FIG. 8 is a diagram illustrating an example of operations of a second device.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following description is provided to assist the reader in gaining a comprehensive understanding of the methods, apparatuses, and/or systems described herein. Accordingly, various changes, modifications, and computer readable medium having instructions to cause a processor to perform according to the steps of the methods, apparatuses, and/or systems described herein will be apparent to one of ordinary skill in the art. Also, descriptions of well-known functions and constructions may be omitted for increased clarity and conciseness.

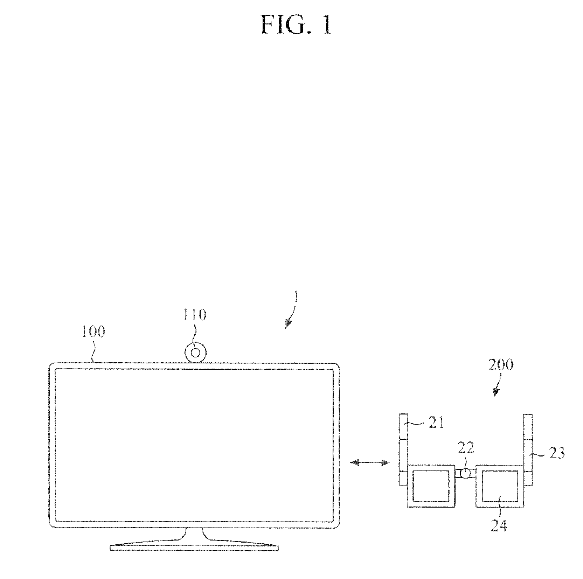

FIG. 1 is a diagram illustrating an example of an apparatus for providing a social network service 1. Referring to FIG. 1, the system 1 may include a first device 100 and a second device 200. As a non-exhaustive illustration only, the first device 100 may be any type of device, such as, for example, a 2D/3D smart TV, a high-definition television (HDTV), a TV connected to a smart box, a TV connected to a set-top box, a game console, a computer equipped with a TV tuner card, a mobile phone, a smart phone, a wearable smart device (such as, for example, a watch, a glass, or the like), a tablet personal computer (PC), a personal digital assistant (PDA), a digital camera, a portable game console, and an MP3 player, a portable/personal multimedia player (PMP), a handheld e-book, an ultra mobile personal computer (UMPC), a portable lab-top PC, a global positioning system (GPS), and devices such as a desktop PC, an optical disc player, a setup box, an appliance, and the like that enable a user to enjoy a variety of content, such as, for example, broadcast programs, games, videos, movies, audio, and music. For convenience of description, a device with a TV receiver function is used as an example to describe the configuration of the first device 100.

The first device 100 enables a user to communicate with friends in real time while watching TV. The first device 100 provides a friend list to the user, transmits a conversation request to a first devices of the friends selected from the friend list, and enables the user to initiate a real-time conversation with friends who accept the conversation request. The first device 100 may receive images of the friends from the first devices of friends who accept the conversation request. The first device 100 may use an image sensor 110 to collect images of the user and to transmit the collected images to the user's friends selected from the friend list. One or more image sensor 110 may be provided, and each image sensor 110 may create a 2D image, a 3D image, a high-definition 3D image, or a hologram. The first device 100 may receive and output the voices of the user's friends, and may transmit the voice of the user to the first devices of the user's friends, thereby enabling the user to have a real-time audio conversation while watching TV.

The second device 200 may be connected with the first device 100 through a wired or wireless communication network and may be able to transmit and receive a diversity of data. The second device 200 may display virtual images of the friends. For example, as shown in FIG. 1, the second device 200 may be a wearable device in the form of glasses, having frames 21 and lenses 24. In another non-exhaustive example, the second device 200 may be a smart watch with a single-screen or a multi-screen display. The examples of the second device 200 described above are only non-exhaustive illustrations, and all other types of second device 200 that are capable of creating and displaying an image and communicating with the first device 100 are considered to be well within the scope of the present disclosure.

The second device 200 may generate virtual images to be displayed to the user, based on the images of the user's friends that are received by the first device 100. The second device 200 may display the virtual images at a location desired by the user. Referring to FIG. 1, the second device 200 may include an image sensor 22, such as, for example, a camera that can capture the user's movement and location. The second device 200 may also include a display unit 23 to display the generated virtual images at particular locations. In another non-exhaustive example only, the display unit 23 may display the virtual images of the user's friends on the lens 24. The image sensor 22 may also detect the user's movement to recognize a user's state, such as, for example, the user's eye position or viewing angle to identify a user's desired location.

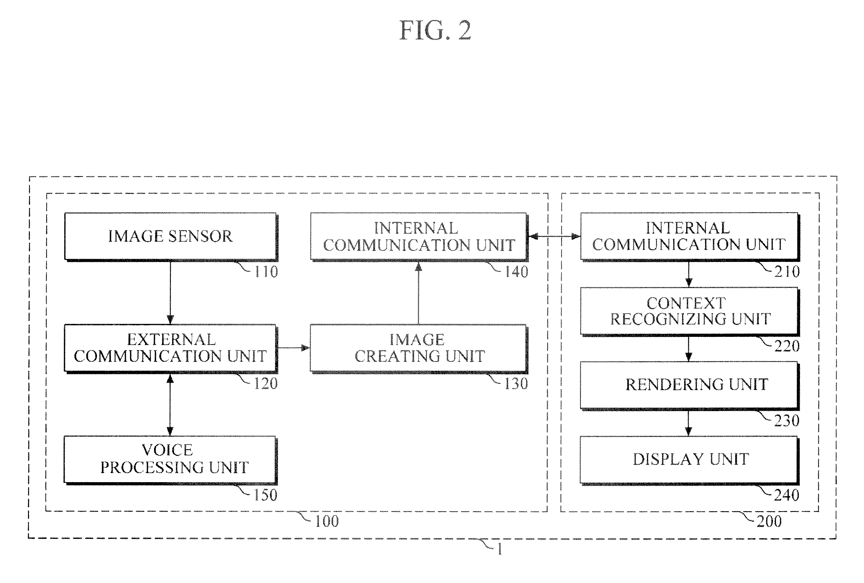

FIG. 2 is a diagram illustrating an example of an apparatus for providing SNS. The description of FIG. 1 is also applicable to FIG. 2, and thus will not be repeated here. Referring to FIG. 2, the system 1 may include a first device 100 and a second device 200. The first device 100 may include an image sensor 110, an external communication unit 120, an image creating unit 130, an internal communication unit 140, and a voice processing unit 150. As described above, the image sensor 110 may collect images of the user.

The external communication unit 120 may transmit and receive a variety of data required for real-time SNS activities. For example, the external communication unit 120 may be connected via wired or wireless connection with a first device of the user's friend. As another non-exhaustive example only, the external communication unit 120 may also be connected via wired or wireless connection with an external communication unit of the first device of the user's friend. The external communication unit 120 may be capable of performing various tasks, such as, for example, upon receiving a request from the user, the external communication unit 120 may transmit a conversation initiation request message to other devices. As other non-exhaustive illustrations only, the external communication unit 120 may receive conversation acceptance information from other devices, the external communication unit 120 may receive images, audio, and video data from other devices, and the external communication unit 120 may transmit the image or a user's voice to the other participating devices.

The image creating unit 130 may create reference images based on images of the user's friends participating in the conversation, which are received through the external communication unit 120. For example, the reference image may be the image received from the user's friends. As another non-exhaustive illustration only, the reference image may be a default image previously determined for each of the user's friends. The default image may be stored in a default image database (DB), which is not illustrated. The default image DB may store various images for the user and his friends, including, but not limited to, avatars, images of celebrities, real images of users participating in the conversation, and images associated with the user and his friends.

When the user's friend accepts a conversation request, the image creating unit 130 may check whether the default image DB contains a default image assigned to the user's friend. If a default image is present in the default image DB, the image creating unit 130 may create a reference image based on the default image. In another non-exhaustive example only, in response to receiving the image of the user's friend, the image creating unit 130 may provide the display of the first device 100 or the display of the second device 200 with a number of default images and an image selected from the default images may be used as the reference image.

The user may identify an emotional state (for example, joy, sadness, anger, or the like) for the user's friend based on the received image, and select a relevant default image pertaining to the emotional state (for example, a default image having a joyful facial expression, a default image having a sad facial expression, a default image having an angry facial expression, or the like). The user may also select default images, having different facial expressions, for the user's friends depending on the user's mood. For example, if the user is angry with a particular conversation participant, the user may select a default image having an unpleasant facial expression for that user. As another non-exhaustive example, if the user has a favorable feeling to another conversation participant, the user may select a default image having a friendly facial expression for the conversation participant.

The internal communication unit 140 may transmit the reference image of each conversation participant to the second device 200. The internal communication unit 140 may be connected with the second device 200 via a wireless communication network, such as, for example, wireless mobile network, WiMAX, WiFi, Bluetooth, near field communication (NFC), or via a wired communication network, such as, for example, Ethernet, universal serial bus (USB). The internal communication unit 140 may transmit and receive data to/from the second device 200. For example, in response to the receipt of a data, such as voice from the user's friend in a conversation, the internal communication unit 140 may transfer the voice to the second device 200 and may receive the user's response from the second device 200.

The voice processing unit 150 may output the voice of the user's friend that is received through the external communication unit 120. The voice processing unit 150 may also receive the voice of the user and transmit it to the first device of the user's friend through the external communication unit 120.

The first device 100 may receive variety of control instructions from the user, and perform operations in response to the received instructions. For example, when the first device 100 receives control instruction to show a list of persons who are watching the same broadcast program, the first device 100 may output a list of the user's friends currently viewing the same broadcast program to a display. As other non-exhaustive example only, when the first device 100 receives control instruction to initiate a conversation with a particular person from the user, it transmits conversation initiation request information to a friend of the user selected from the list, through the external communication unit 120.

The system 1 may also include a relay server (not shown). The relay server may enable a user's diverse SNS activities and relay data transmission/reception between the user and the user's friends. For example, the relay server may provide a list of friends of the user in response to a request from the external communication unit 120 As another non-exhaustive example only, the relay server may provide information on the activities of the user's friends(for example, the broadcast program being currently viewed by each friend). As another non-exhaustive example only, the relay server may transmit conversation initiation request to the friends selected by the user or it may transmit images and/or voice information from friends participating in the conversation to the user.

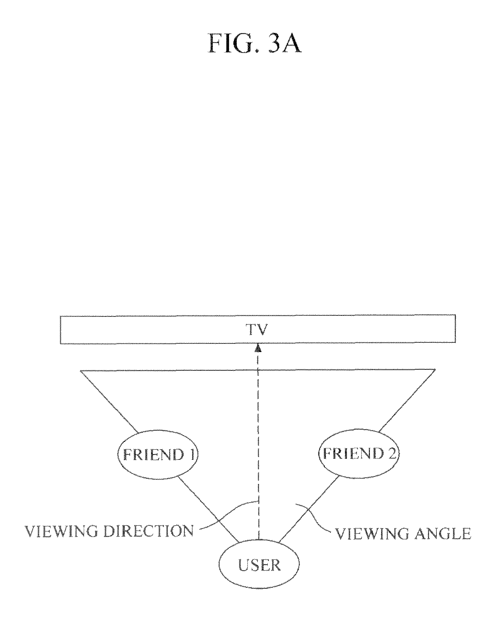

FIGS. 3A to 3C are diagrams illustrating examples of displaying an image of another user. The second device 200 of the social network service system 1 is described with reference to FIG. 2 and FIGS. 3A to 3C. The second device 200 may include an internal communication unit 210, a context recognizing unit 220, a rendering unit 230, and a display unit 240.

The internal communication unit 210 receives a reference image, voice, or other data from the first device 100, and transmits the user's voice to the first device 100.

The context recognizing unit 220 recognizes a current contextual situation of a user and generates context information. The context recognizing unit 220 creates context information based on a recognized vision of the user, such as, for example, a current viewing direction or viewing angle of the user. The context recognizing unit 220 may identify the viewing direction or viewing angle of the user from images of the user's movement. The images of the user's movement may be captured and generated by the image sensor 110 of the first device 100, and the internal communication unit 210 may receive the images from the first device 100. In another non-exhaustive example only, as shown in FIG. 1, the second device 200 may include an image sensor 22 to capture and generate images of the user's movement. The image sensor 22 may capture the user's movement, including the user's face to generate context information.

The rendering unit 230 may render the reference image to generate a virtual image to for the user. The rendering unit 230 may render the reference image based on the context information created by the context recognizing unit 220. The rendering unit 230 may determine a shape of the virtual image to be rendered using information about the viewing direction and viewing angle of the user.

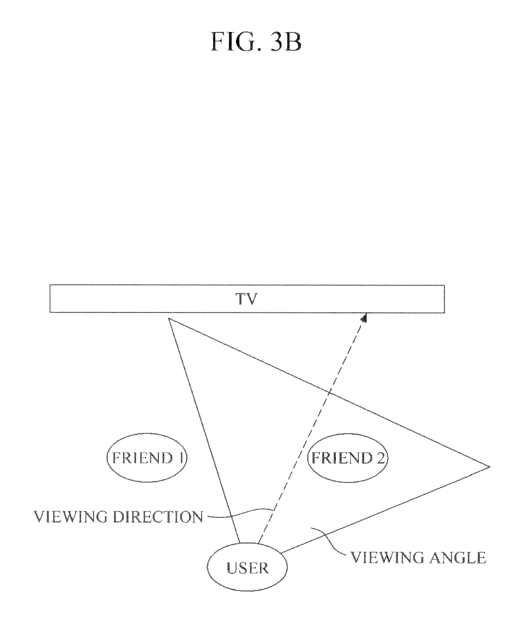

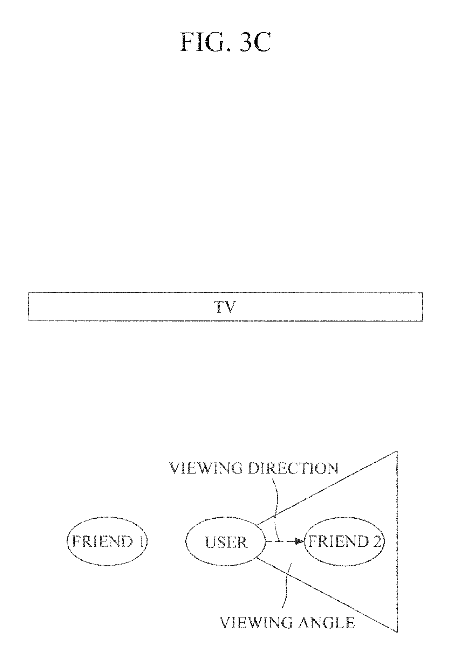

FIGS. 3A and 3B are diagrams illustrating examples of displaying virtual images of the user's friends (friend 1 and friend 2) at arbitrary locations. FIG. 3A is a diagram illustrating an example of a user directly viewing the front of a TV display. In this example, the context recognizing unit 220 recognizes that the user views the TV directly from the front. In this case, the viewing angle may be 45 degrees, which is a normal human viewing angle, or a given value that can be provided by the second device 200. FIG. 3C is a diagram illustrating an example of displaying a virtual image of the user's friend at a location where the user may feel that the virtual image is located next to the user. Here, the user may assign the location where the virtual image is displayed. For example, the virtual images of the user's friend may be displayed at arbitrary locations in the second device when the user watches TV, sitting on the floor, or when the user watches TV sitting on a sofa, the images may be displayed at such locations in the second device that the user can feel as if the user's friends were sitting close to the user. The rendering unit 230 may determine a location where to display the virtual image, and determine a virtual shape to render using information about the determined location and the user's viewing angle. For example, as shown in FIG. 3A, when the user's eyes look directly forward, the rendering unit 230 may generate a virtual image by rendering only a left side and a right side of the reference images of friend 1 and friend 2, respectively, within the viewing angle. As shown in FIGS. 3B or 3C, the rendering unit 230 may generate a virtual image by rendering the entire reference image of friend 2 who comes within the user's viewing angle as the user turns his/her eyes to the right.

The display unit 240 may display the virtual image created by the rendering unit 230 at a given location in an overlapping manner. As shown in FIG. 1, if the user is viewing an actual image at a given location through the lens 24, the display unit 240 may display the virtual image to overlap the actual image at the given location, thereby providing augmented reality capabilities.

Because it is possible to create realistic images of the user's friends and to thereby allow the user to feel as if the user's friends are sitting at given locations in the same place as the user, the devices described in the above examples may provide a useful social environment to the user when the user's friends cannot be in the same place due to restrictions in time or space.

The context recognizing unit 220 may recognize the user's contextual situation in real time, and create real-time context information according to the user's viewing direction. The context recognizing unit 220 may compare information about the previous viewing direction with newly created viewing direction information, and if displacement of the viewing direction falls beyond a predefined range, may control the rendering unit 230 to render the reference image once again.

The second device 200 may include a voice processing unit (not illustrated) to output voice received from the first device 100, and to receive the user's voice and transmit it to the first device 100. The voice processing unit may include speakers to output the voice and a microphone to receive the voice.

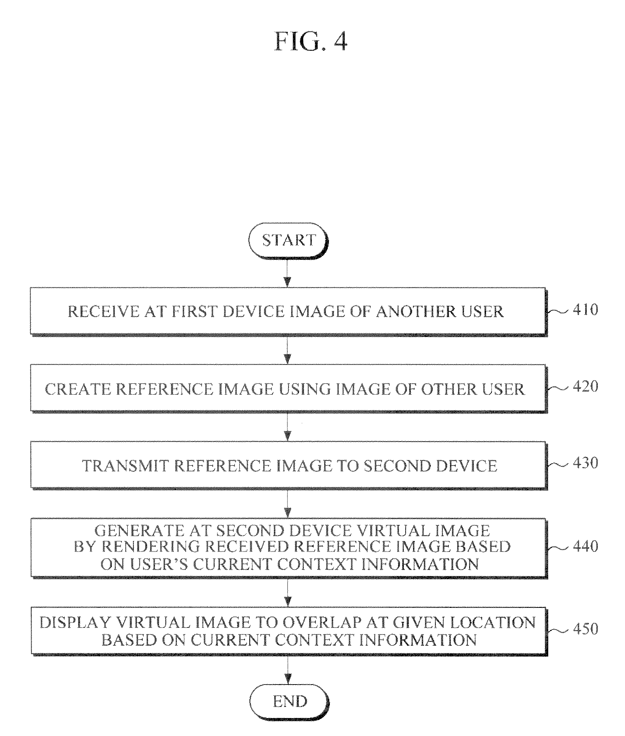

FIG. 4 is a diagram illustrating an example of a method of providing a social network service according to an exemplary embodiment of the present invention. The operations in FIG. 4 may be performed in the sequence and manner as shown, although the order of some operations may be changed or some of the operations omitted without departing from the spirit and scope of the illustrative examples described. Many of the operations shown in FIG. 4 may be performed in parallel or concurrently. The description of FIGS. 1-3C is also applicable to FIG. 4, and thus will not be repeated here.

The method of providing a social network service is described with reference to FIGS. 1 and 4.

In 410, the first device 100 receives images of the user's friends. The user, who wants to converse with friends in real time while watching for example, a broadcast program on TV, may receive images or voice information of the friends from their first devices when they accept a request for a conversation. The user's friends may be, but are not necessarily, watching the same broadcast program.

In 420, a reference image to be displayed to the user is created based on the image received of the user's friends. In 430, the reference image is transmitted to the second device 200. The first device 100 may create the reference image as described above. The reference image is transmitted to the second device 200 over a wired or wireless communication network. If voice of the user's friend is received, the first device 100 may output the received voice or transmit it to the second device 200.

When the reference image is received from the first device 100, in 440, the second device 200 renders the reference image based on the current context information. Details of the user's current context information are explained above. The current context information may be created based on images of the user's real-time movement including, but not limited to facial movement that may be collected by the image sensor 110 of the first device 100 or the image sensor 22 of the second device 200. The second device 200 creates a virtual image by rendering the reference image based on the context information. As described with reference to FIGS. 3A to 3C, a shape of the virtual image may be determined based on the current viewing direction and viewing angle of the user and the virtual image may be created by rendering the reference image in accordance with the determined virtual image.

In 450, the created virtual image is displayed at a given location. By displaying the virtual image to overlap a real image at the real location, the user may experience augmented reality.

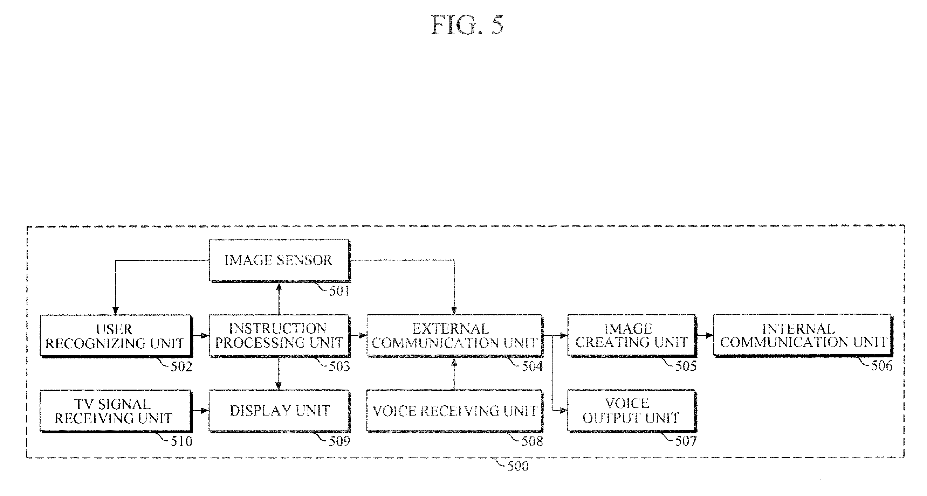

FIG. 5 is a diagram illustrating an example of a first device. The first device 500 shown in FIG. 5 is another non-exhaustive example of the first device 100 in the system 1 for providing a SNS. The description of FIGS. 1-4 is also applicable to FIG. 5, and thus will not be repeated here.

Referring to FIG. 5, the first device 500 may include an image sensor 501, a user recognizing unit 502, an instruction processing unit 503, an external communication unit 504, an image creating unit 505, an internal communication unit 506, a voice output unit 507, a voice receiving unit 508, a display unit 509, and a TV signal receiving unit 510. The image sensor 501, the external communication unit 504, the image creating unit 505, and the internal communication unit 506 are fully described with reference to FIG. 2, and thus the detailed descriptions of these units will not be repeated.

The user recognizing unit 502 recognizes a user currently viewing the TV. The user recognizing unit 502 may recognize the user by receiving user identification information (e.g., ID or passwords) from the user. The user recognizing unit 502 may recognize the user by applying a face recognition method to images of the user's face collected by the image sensor 501. The user recognizing unit 502 may recognize the user using any other biometric identification techniques, and such user recognizing units 502 are considered to be well within the scope of the present disclosure.

The TV signal receiving unit 510 may receive TV signals and output the signals through the display unit 509.

The instruction processing unit 503 may receive various control instructions from the user and perform operations in response to the instructions. For example, the instruction processing unit 503 may output a menu through the display unit 509 in response to the user's request for the menu through an input, such as, for example, a remote control, a keyboard, or a smart phone. If the user selects from the output menu a list of friends to chat with, the user recognizing unit 502 may output a previously stored list of friends, who are associated with the user to the display unit 509. As a non-exhaustive example only, in response to a request for the list of the friends currently viewing the same TV show that the user is viewing, the instruction processing unit 503 may collect information on TV shows that the user's friends in the previously displayed list are currently watching and provide to the display unit 509 a list of the friends who are watching the same TV show as the user. The second list may be displayed all by itself or alongside the previously displayed list of the user's friends.

In response to the user's selection of particular friends from the provided list, the instruction processing unit 503 may create conversation initiation request information and transmit it to the first devices of the selected friends through the external communication unit 504. In response to conversation acceptance information being received from the user's friend, the instruction processing unit 503 may control the image sensor 501 to create an image of the user, and the instruction processing unit 503 may control the external communication unit 504 to transmit the captured image of the user to the first device of the user's friend who accepts the conversation request.

In response to receiving an image from the user's friend through the external communication unit 504, the image creating unit 505 may create a reference image and transmit it to the second device through the internal communication unit 506.

The voice receiving unit 505 may receive voice information of the user and transmit it to the first device of the user's friend through the external communication unit 504. When the external communication unit 504 receives voice information from the first device of the user's friend, the voice output unit 509 may output the received voice information to an output, such as a speaker or a headset. As another non-exhaustive example, the voice output unit 509 may output the received voice to the second device 200.

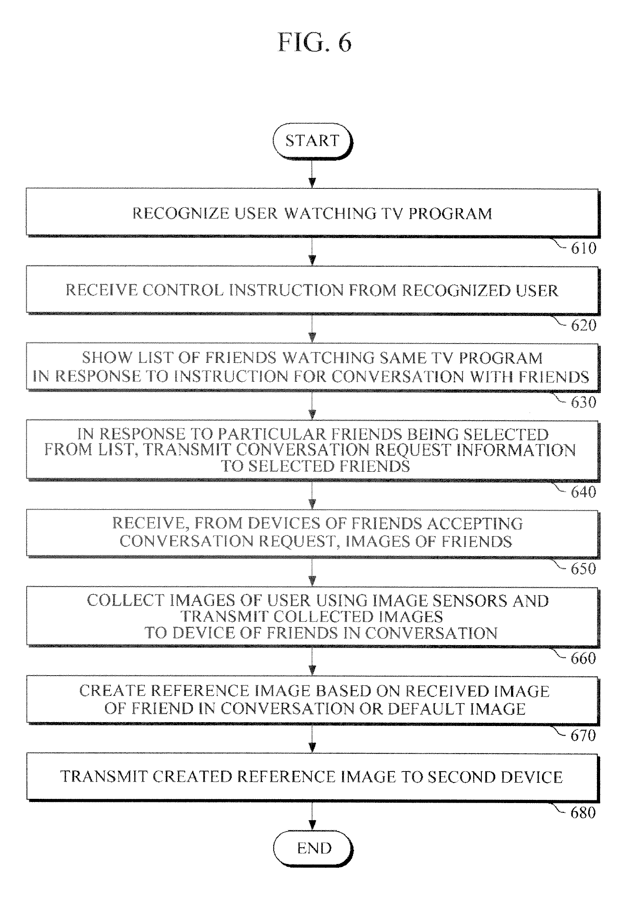

FIG. 6 is a diagram illustrating an example of operations of a first device. The operations in FIG. 6 may be performed in the sequence and manner as shown, although the order of some operations may be changed or some of the operations omitted without departing from the spirit and scope of the illustrative examples described. Many of the operations shown in FIG. 6 may be performed in parallel or concurrently. The description of FIGS. 1-5 is also applicable to FIG. 6, and thus will not be repeated here.

In 610, a user currently viewing a TV show is recognized. The user may be recognized by through user identification information (e.g., ID and passwords), or by applying a face recognition method to the user's facial image collected by an image sensor. The user may also be identified by other biometric identification methods.

In 620, various control instructions are received from the recognized user. If the user desires to have a conversation with friends, in 630, the first device may provide a list of friends to the user. In 640, when the user selects a particular friend from the list, conversation initiation request information is transmitted to a device of the friend.

In 650, conversation acceptance information is received from the user's friend, and the first device receives an image of the friend. In 660, the first device collects images of the user using an image sensor and transmits the collected images to the user's friend.

In 670, a reference image to be displayed to the user is created using the image of the friend and/or a previously stored default image. In 680, the created reference image is transmitted to the second device.

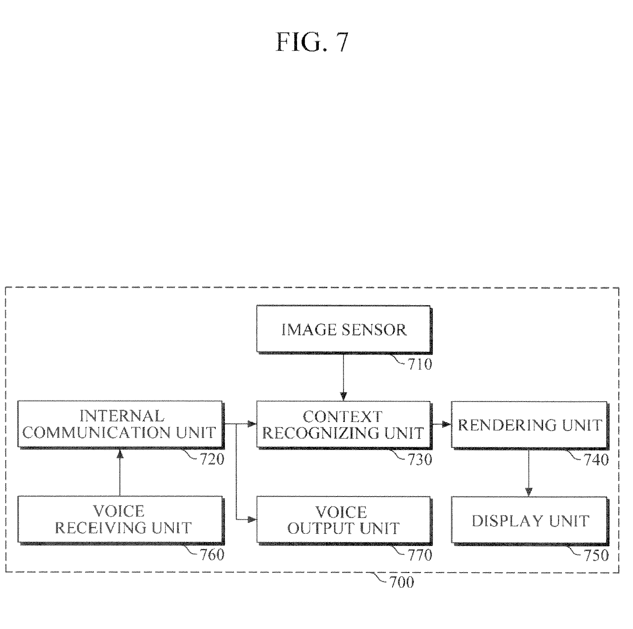

FIG. 7 is a diagram illustrating an example of a second device. The second device 700 illustrated in FIG. 7 is another example of the second device 200 of system 1 shown in FIG. 1. The second device 700 may be a wearable device in the form of glasses. The description of FIGS. 1-6 is also applicable to FIG. 7, and thus will not be repeated here. Referring to FIG. 7, the wearable second device 700 may include an image sensor 710, the internal communication unit 720, a context recognizing unit 730, a rendering unit 740, a display unit 750, a voice receiving unit 760, and a voice output unit 770.

The image sensor 710 of the second device 700 may be a camera capable of generating a 2D image, a 3D image, a high-definition 3D image, or a hologram. The image sensor 710 may monitor the user's movement and location in real time, generate movement images, and may recognize depth information. If the user wears the glass-like second device 700, the image sensor 710 may take pictures of the scene at which the user looks according to the user's head movement, and generate images of the scene.

The context recognizing unit 730, rendering unit 740, and the display unit 750 are described above with reference to units 220, 230, and 240, respectively, of FIG. 2. The context recognizing unit 730 may recognize a viewing direction or viewing angle of the user based on the images of the user's movement generated by the image sensor 710 or the image sensor of the first device. The rendering unit 740 and the display unit 750 may render and display a virtual image of the reference image as described with reference to FIG. 2.

The voice receiving unit 760 may receive a user's voice through a microphone installed in a predefined region of the second device 700, and transmit it to the first device through the internal communication unit 720. In response to receiving the user's voice from the first device through the internal communication unit 720, the voice output unit 770 may output the received voice to the speaker installed in a predefined region of the second device 700.

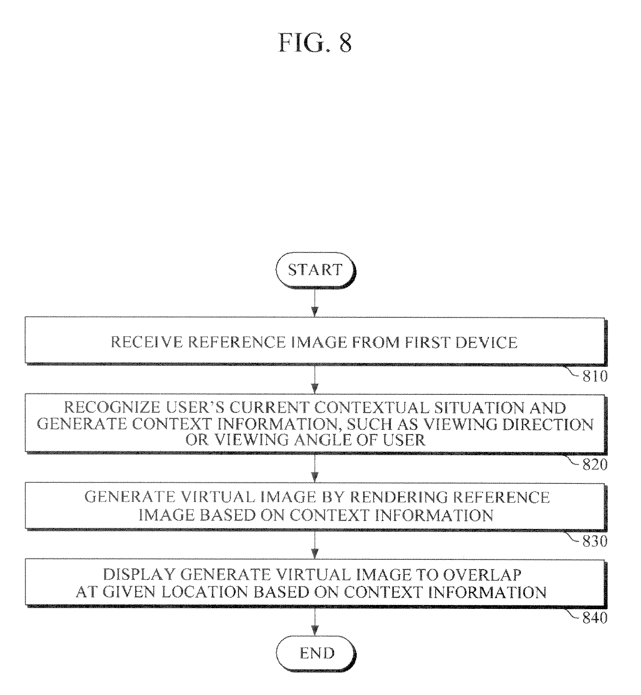

FIG. 8 is a diagram illustrating an example of operations of a second device. The operations in FIG. 8 may be performed in the sequence and manner as shown, although the order of some operations may be changed or some of the operations omitted without departing from the spirit and scope of the illustrative examples described. Many of the operations shown in FIG. 8 may be performed in parallel or concurrently. The description of FIGS. 1-7 is also applicable to FIG. 8, and thus will not be repeated here.

In 810, when a reference image of the user's friend is received from the first device. In 820, the second device 700 recognizes the user's current contextual situation and generates context information, such as a viewing direction or a viewing angle of the user. The context information of the user may be generated based on images of the user's movement, and the movement images may be created by the image sensor of the second device 700 or received from the first device.

In 830, the received reference image is rendered as a virtual image based on the received user's context information. In 840, the generated virtual image is displayed to overlap at a given location in the display unit.

The methods described above can be written as a computer program, a piece of code, an instruction, or some combination thereof, for independently or collectively instructing or configuring the processing device to operate as desired. Software and data may be embodied permanently or temporarily in any type of machine, component, physical or virtual equipment, computer storage medium or device that is capable of providing instructions or data to or being interpreted by the processing device. The software also may be distributed over network coupled computer systems so that the software is stored and executed in a distributed fashion. In particular, the software and data may be stored by one or more non-transitory computer readable recording mediums. The non-transitory computer readable recording medium may include any data storage device that can store data that can be thereafter read by a computer system or processing device. Examples of the non-transitory computer readable recording medium include read-only memory (ROM), random-access memory (RAM), Compact Disc Read-only Memory (CD-ROMs), magnetic tapes, USBs, floppy disks, hard disks, optical recording media (e.g., CD-ROMs, or DVDs), and PC interfaces (e.g., PCI, PCI-express, WiFi, etc.). In addition, functional programs, codes, and code segments for accomplishing the example disclosed herein can be construed by programmers skilled in the art based on the flow diagrams and block diagrams of the figures and their corresponding descriptions as provided herein.

The apparatuses and units described herein may be implemented using hardware components. The hardware components may include, for example, controllers, sensors, processors, generators, drivers, and other equivalent electronic components. The hardware components may be implemented using one or more general-purpose or special purpose computers, such as, for example, a processor, a controller and an arithmetic logic unit, a digital signal processor, a microcomputer, a field programmable array, a programmable logic unit, a microprocessor or any other device capable of responding to and executing instructions in a defined manner. The hardware components may run an operating system (OS) and one or more software applications that run on the OS. The hardware components also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a hardware component may include multiple processors or a processor and a controller. In addition, different processing configurations are possible, such a parallel processors. A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components. Accordingly, other implementations are within the scope of the following claims.

## Claims

1. A system for providing a social network service, SNS, the system comprising:
a first device configured to receive an image of a first user, to create a reference image based on the received images, and to transmit the reference image to a second device; and
the second device is configured to receive the reference image from the first device, to generate a virtual image based on the reference image and current context information of a second user, and to display the virtual image at predetermined locations.

2. The system of claim 1, wherein the first device comprises an image sensor configured to collect images of the second user, and to transmit the collected images to the first user.

3. The system of claim 1 or 2, the first device is further configured to receive a first audio of the first user and to output the first audio or to transmit the first audio to the second device, and to receive a second audio of the second user and to transmit the second audio to the first user.

4. The system of one of claims 1 to 3, wherein the first device is further configured to receive one or more control instructions to control the first device, the control instructions comprising instructions to show a list of friends of the second user currently watching a broadcast program, or to initiate a conversation with one or more friends of the second user.

5. The system of one of claims 1 to 4, wherein the context information comprises at least one of a viewing direction or viewing angle of the second user.
wherein the second device is further configured to determine a shape of the virtual image based on the context information and a location at which to display the virtual image.

6. The system of one of claims 1 to 5, wherein the first device is a television configured to receive and output TV signals, and the second device is a wearable device.

7. The system of one of claims 1 to 6, wherein the virtual image is displayed to overlap another image displayed on the first device, and/or a portion of the virtual image of the first user is displayed at said predetermined locations.

8. A method of providing a social network service, SNS, the method comprising:
receiving, at a first device, an image of a first user of the SNS;
creating a reference image based on the received image;
transmitting the reference image to a second device;
generating, at the second device, a virtual image based on the reference image and current context information of a second user; and
displaying the virtual image at predetermined locations.

9. The method of claim 8, wherein the creating the reference image comprises creating the reference image based on the received image and a default image of the first user,
wherein the default image is based on at least one of an emotional state of the first user or a facial expression of the first user, or the default image is stored in the default image database and comprises at least one of avatars, images of celebrities, real images of the first user, or images associated with the first user.

10. A device comprising:
at least one image sensor, the image sensor configured to collect an image of a first user;
a first communication unit configured to transmit the image of the first user to a second user, and to receive an image of the second user;
an image creating unit configured to create a reference image based on the received image of the second user; and
a second communication unit configured to transmit the reference image to a second device; and to generate a virtual image to be displayed to the first user using the reference image.

11. The device of claim 10, further comprising:
a user recognizing unit configured to recognize the first user; and
an instruction processing unit configured to receive various control instructions from the first user and to process corresponding operations in response to the control instructions, and/or
wherein the control instructions comprises at least one of showing a list of all friends, showing a list of friends currently watching a broadcast program, or initiating a conversation with a particular friend.

12. The device of claim 10 or 11, further comprising:
a voice output unit configured to output a audio of the second user that is received through the first communication unit; and
a voice receiving unit configured to receive a audio of the first user and to transmit the audio of the first user to the second user through the first communication unit, and/orfurther comprising:
a default image database (DB) configured to store default images for creating the reference image,
wherein the image creating unit is configured to select one default image based on the received image of the second user to create the reference image.

13. A second device comprising:
a communication unit configured to receive a reference image of a second user from a first device;
a context recognizing unit configured to recognize a current contextual information of a first user watching content displayed on the first device;
a rendering unit configured to generate a virtual image based on the received reference image and the context information; and
a display unit configured to display the generated virtual image at a predetermined location.

14. The second device of claim 13, further comprising:
an image sensor configured to create an image of the first user: and
the context recognizing unit analyzes the image of the first user and generates the context information comprising at least one of a viewing direction or a viewing angle of the user, and/or
wherein the rendering unit is further configured to determine a shape of the virtual image based on the context information and a location at which to display the virtual image.

15. The second device of claim 13 or 14, further comprising:
a voice output unit configured to output a spoken voice of the second user which is received from the first device through the communication unit; and
a voice receiving unit configured to receive a spoken voice of the first user and to transmit the received voice to the first device through the communication unit.
